(19) Europäisches Patentamt
European Patent Office
Office européen des brevets

(11) **EP 4 484 757 A1**

(12) **EUROPEAN PATENT APPLICATION**
published in accordance with Art. 153(4) EPC

(43) Date of publication:
01.01.2025 Bulletin 2025/01

(21) Application number: 23779073.8

(22) Date of filing: 22.02.2023

(51) International Patent Classification (IPC):
F04D 29/051 (2006.01)    F04D 29/058 (2006.01)
F04D 29/10 (2006.01)    F04D 29/28 (2006.01)
F16C 32/04 (2006.01)    F16J 15/447 (2006.01)

(52) Cooperative Patent Classification (CPC):
F04D 29/051; F04D 29/058; F04D 29/10;
F04D 29/28; F16C 32/04; F16J 15/447

(86) International application number:
PCT/JP2023/006563

(87) International publication number:
WO 2023/189043 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.03.2022 JP 2022056699

(71) Applicant: DAIKIN INDUSTRIES, LTD.
Osaka-shi, Osaka 530-0001 (JP)

(72) Inventors:
• FUKUDA, Daigo
Osaka-shi, Osaka 530-0001 (JP)

• NISHIMURA, Kosuke
Osaka-shi, Osaka 530-0001 (JP)
• TANAKA, Koichi
Osaka-shi, Osaka 530-0001 (JP)
• IWATA, Arihiro
Osaka-shi, Osaka 530-0001 (JP)
• OMORI, Naomichi
Osaka-shi, Osaka 530-0001 (JP)

(74) Representative: Goddar, Heinz J.
Boehmert & Boehmert
Anwaltspartnerschaft mbB
Pettenkoferstrasse 22
80336 München (DE)

(54) **TURBOMACHINE**

(57) A turbomachine includes a shaft, an impeller, a casing, a motor separated from the impeller in an axial direction, and a seal portion sealing between the impeller side and the motor side. The impeller has an impeller suction portion into which fluid is sucked and an impeller discharge portion from which the fluid is discharged. The seal portion has a rotary seal portion provided on the shaft and a fixed seal portion provided on the casing. The rotary seal portion and the fixed seal portion are spaced apart from each other in a radial direction, extend in the axial direction, and form a leakage flow path through which the fluid discharged from the impeller discharge portion leaks from the impeller side to the motor side. The maximum seal diameter of the leakage flow path is greater than the inlet diameter of the impeller suction portion.

FIG.1

**Description**

TECHNICAL FIELD

The present disclosure relates to a turbomachine.

BACKGROUND ART

In a turbomachine such as a turbo compressor or a pump, thrust force in an axial direction may be generated on an impeller. If the thrust force is great, a thrust bearing is inevitably increased in size. For this reason, various techniques have been disclosed in order to reduce the thrust force.

For example, in a compression device according to Patent Document 1, a seal cylindrical portion having the same diameter as that of an airtight seal mechanism of a shroud-type impeller is integrally provided on a rotary shaft on an air outlet side of the shroud-type impeller. The airtight seal mechanism is provided between the outer periphery of the seal cylindrical portion and a housing. Pressure on the air outlet side acts on the entire surface of the seal cylindrical portion on the shroud-type impeller side.

A space is formed on the motor side with respect to the seal cylindrical portion in the housing. Pressure on the air inlet side of the shroud-type impeller is introduced into the space through a communication passage formed in the housing. The pressure on the air inlet side acts on the entire surface of the seal cylindrical portion on the motor side.

Thus, the pressure on the air outlet side, which acts on the shroud-type impeller and the rotary shaft, is cancelled, and generation of the thrust force is reduced.

CITATION LIST

PATENT DOCUMENTS

Patent Document 1: Japanese Unexamined Patent Publication No. H11-218091

SUMMARY OF THE INVENTION

TECHNICAL PROBLEM

The compression device according to Patent Document 1 has a complicated structure because it is necessary to provide two or more airtight seal mechanisms for one shroud-type impeller and to provide the space and the communication passage in the housing.

It is an object of the present disclosure to provide a turbomachine capable of reducing thrust force with a simple configuration.

SOLUTION TO THE PROBLEM

A first aspect of the present disclosure is directed to a turbomachine (1). The turbomachine (1) includes a rotary shaft (10), an impeller (20) provided on the rotary shaft (10), a casing (30) housing the rotary shaft (10), a prime mover (40) spaced apart from the impeller (20) in the axial direction of the rotary shaft (10) and rotating the rotary shaft (10), and a seal portion (70) sealing between the impeller (20) side and the prime mover (40) side. The impeller (20) has an impeller suction portion (21) into which fluid (W) is sucked, and an impeller discharge portion (22) from which the fluid (W) is discharged. The seal portion (70) has a rotary seal portion (71) provided on the rotary shaft (10), and a fixed seal portion (72) provided on the casing (30). The rotary seal portion (71) and the fixed seal portion (72) are spaced apart from each other in the radial direction of the rotary shaft (10), and extends in the axial direction. The rotary seal portion (71) and the fixed seal portion (72) form a leakage flow path (73) through which the fluid (W) discharged from the impeller discharge portion (22) leaks from the impeller (20) side to the prime mover (40) side. The maximum seal diameter (S1) of the leakage flow path (73) is greater than the inlet diameter (D1) of the impeller suction portion (21).

In the first aspect, thrust force (F) acting on the impeller (20) can be made close to zero simply by adjusting the maximum seal diameter (S1) of the leakage flow path (73) within the range greater than the inlet diameter (D1) of the impeller suction portion (21). Thus, the turbomachine (1) capable of reducing the thrust force (F) with a simple configuration can be provided.

A second aspect of the present disclosure is an embodiment of the first aspect. In the turbomachine (1) of the second aspect, a pressure (P3) on the prime mover (40) side is lower than the pressure (P2) of the fluid (W) discharged from the impeller discharge portion (22).

In the second aspect, the thrust force (F) acting on the impeller (20) can be more reliably made close to zero.

A third aspect of the present disclosure is an embodiment of the first or second aspect. In the turbomachine (1) of the third aspect, the seal circumferential speed (V) of the rotary seal portion (71) is 0.8 times or more the sound speed (A) of the fluid (W).

The third aspect is advantageous in reducing leakage of the fluid (W) from the impeller (20) side to the prime mover (40) side through the leakage flow path (73).

A fourth aspect of the present disclosure is an embodiment of the third aspect. In the turbomachine (1) of the fourth aspect, the seal circumferential speed (V) is 0.8 times or more the sound speed (A1) of the fluid (W) on the impeller (20) side.

The fourth aspect is more advantageous in reducing the leakage of the fluid (W) through the leakage flow path (73).

A fifth aspect of the present disclosure is an embodiment of the third or fourth aspect. In the turbomachine (1) of the fifth aspect, the seal circumferential speed (V) is 0.8 times or more the sound speed (A2) of the fluid (W) on the prime mover (40) side.

The fifth aspect is more advantageous in reducing the leakage of the fluid (W) through the leakage flow path (73).

A sixth aspect of the present disclosure is an embodiment of any one of the first to fifth aspects. In the turbomachine (1) of the sixth aspect, the rotary shaft (10) is supported by a non-contact bearing (50, 60).

In the sixth aspect, the rotary shaft (10) can be supported in a non-contact manner, and therefore, the rotary shaft (10) can be rotated at a high speed and a bearing loss can be reduced.

A seventh aspect of the present disclosure is an embodiment of any one of the first to sixth aspects. In the turbomachine (1) of the seventh aspect, the leakage flow path (73) is formed in a step shape or a corrugated shape.

In the seventh aspect, the pressure loss of the fluid (W) in the leakage flow path (73) increases, and therefore, the leakage of the fluid (W) through the leakage flow path (73) can be reduced.

An eighth aspect of the present disclosure is an embodiment of any one of the first to seventh aspects. The turbomachine (1) of the eighth aspect is a turbo compressor (1).

In the eighth aspect, the fluid (W) can be compressed and pressurized.

A ninth aspect of the present disclosure is an embodiment of the eighth aspect. In the turbomachine (1) of the ninth aspect, the fluid (W) is natural refrigerant including one of HFC refrigerant, HFO refrigerant, or HC refrigerant, or a refrigerant mixture including at least two of the HFC refrigerant, the HFO refrigerant, and the HC refrigerant.

In the ninth aspect, the turbo compressor (1) can be applied to a refrigeration apparatus.

BRIEF DESCRIPTION OF THE DRAWINGS

FIG. 1 illustrates a longitudinal sectional view of a turbo compressor (1) according to a first embodiment of the present disclosure.

FIG. 2 is an enlarged view of a portion II in FIG. 1, which illustrates a seal portion (70) in closeup.

FIG. 3 schematically illustrates thrust force (F) acting on an impeller (20).

FIG. 4 illustrates a relationship between the Mach number (V/A1) of a rotary seal portion (71) and the leakage flow rate of fluid (W) in a leakage flow path (73) on the impeller (20) side.

FIG. 5 illustrates the relationship between the Mach number (V/A2) of the rotary seal portion (71) and the leakage flow rate of the fluid (W) in the leakage flow path (73) on the motor (40) side.

FIG. 6 is a view according to a second embodiment, which corresponds to FIG. 2, and illustrates the seal portion (70) in closeup.

DESCRIPTION OF EMBODIMENTS

<First Embodiment>

(Configuration of Turbo Compressor)

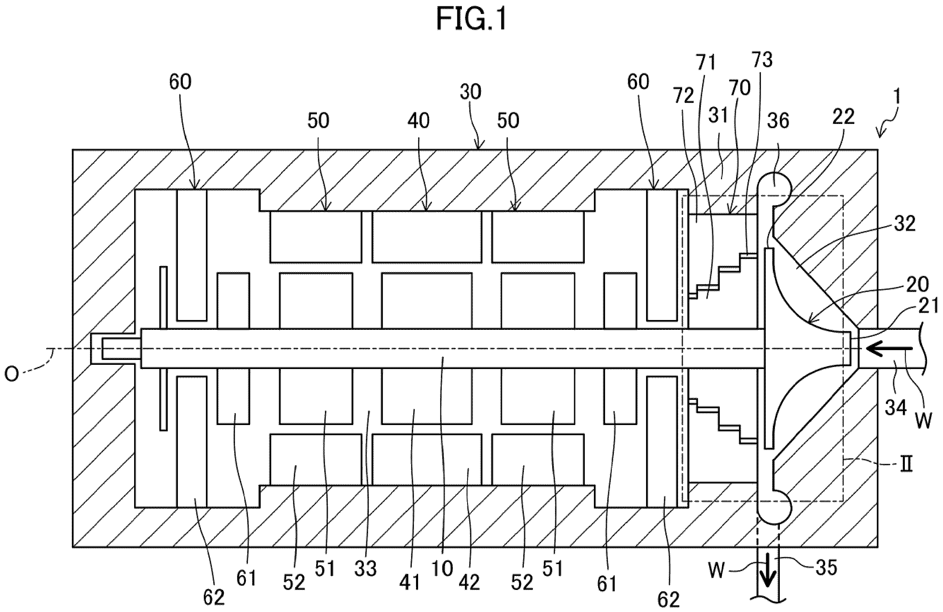

FIG. 1 illustrates a longitudinal sectional view of a turbo compressor (1) as a turbomachine (1) according to a first embodiment of the present disclosure. The turbo compressor (1) is a centrifugal turbo compressor. The turbo compressor (1) compresses and pressurizes fluid (W).

The fluid (W) is preferably natural refrigerant including one of HFC refrigerant, HFO refrigerant, or HC refrigerant, or a refrigerant mixture including at least two of HFC refrigerant, HFO refrigerant, and HC refrigerant.

The HFC refrigerant includes R32, R125, R134a, R143a, and R245fa, for example. The HFO refrigerant includes R1234yf, R1234ze, R1233zd, R1123, and R1132(E), for example. The HC refrigerant includes R744, R717, R290, R600a, and R1270, for example.

A turbo compressor (1) is applied to a refrigeration apparatus such as an air conditioner. The refrigeration apparatus includes a refrigerant circuit in which refrigerant circulates. The turbo compressor (1) compresses the refrigerant in the refrigerant circuit. The refrigerant circulates in the refrigerant circuit, thereby performing a vapor compression refrigeration cycle.

The turbo compressor (1) includes a shaft (10) as a rotary shaft (10), an impeller (20), a casing (30), a motor (40) as a prime mover (40), a radial magnetic bearing (50) as a non-contact bearing (50), a thrust magnetic bearing (60) as a non-contact bearing (60), and a seal portion (70).

The axis (O) of the shaft (10) extends in the horizontal direction. In the following description, a term "axial direction" refers to a direction in which the axis (O) of the shaft (10) extends. Regarding the axial direction, a term "one side" refers to the right side in FIG. 1. Regarding the axial direction, a term "other side" refers to the left side in FIG. 1.

A term "radial direction" refers to a direction perpendicular to the axial direction. An "outer peripheral side" refers to a side farther from the axis (O) of the shaft (10) in the radial direction. An "inner peripheral side" refers to a side closer to the axis (O) of the shaft (10) in the radial direction. A "circumferential direction" refers to the direction of rotation of the shaft (10) about the axis (O).

The impeller (20) is provided at one end portion of the shaft (10). The impeller (20) rotates integrally with the shaft (10). The impeller (20) has a substantially conical outer shape which is raised toward the one side in the axial direction. The impeller (20) is a closed impeller. The impeller (20) has a shroud (side plate) and a plurality of blades.

The impeller (20) has an impeller suction portion (21) and an impeller discharge portion (22). The impeller suction portion (21) opens on the one side of the impeller (20). The impeller suction portion (21) faces the one side. The impeller suction portion (21) has a substantially circular shape as viewed in the axial direction. The fluid (W) is sucked into the impeller suction portion (21). In other words, the impeller suction portion (21) is a fluid (W) inlet of the impeller (20). The impeller suction portion (21) has an inlet diameter (D1) as a diameter centered on the axis (O). The inlet diameter (D1) may be an outer diameter including a thick portion or an inner diameter not including the thick portion.

The impeller discharge portion (22) opens on the outer peripheral side of the impeller (20). The impeller discharge portion (22) faces the outer peripheral side. There are a plurality of impeller discharge portions (22). The impeller discharge portion (22) is formed by a clearance surrounded by the shroud and the plurality of blades of the impeller (20). The fluid (W) is discharged from the impeller discharge portion (22). In other words, the impeller discharge portion (22) is a fluid (W) outlet of the impeller (20). The impeller discharge portion (22) has an outlet diameter (D2) as a diameter centered on the axis (O). The outlet diameter (D2) of the impeller discharge portion (22) is greater than the inlet diameter (D1) of the impeller suction portion (21).

The casing (30) houses the shaft (10). The casing (30) further houses the impeller (20), the motor (40), the radial magnetic bearing (50), the thrust magnetic bearing (60), and the seal portion (70). The casing (30) is formed in a cylindrical shape with both ends closed. The axis of the casing (30) extends horizontally coaxially with the axis (O) of the shaft (10).

An internal space of the casing (30) is partitioned in the axial direction by a partition wall (31). An impeller space (32) is formed in the casing (30) on the one side with respect to the partition wall (31). A motor space (33) is formed in the casing (30) on the other side with respect to the partition wall (31).

One end portion of the shaft (10) and the impeller (20) are housed in the impeller space (32). A portion of the shaft (10) other than the one end portion, the motor (40), the radial magnetic bearing (50), and the thrust magnetic bearing (60) are housed in the motor space (33). The seal portion (70) is housed on the inner peripheral side of the partition wall (31).

A suction pipe (34) and a discharge pipe (35) are connected to the impeller space (32). The impeller space (32) has an outer peripheral portion forming a compression space (36). The suction pipe (34) guides the fluid (W) from the outside to the impeller space (32). The discharge pipe (35) discharges, to the outside, the fluid (W) compressed to a high pressure in the impeller space (32).

As described above, the motor (40) is housed in the motor space (33). In other words, the motor (40) is spaced apart from the impeller (20) housed in the impeller space (32) in the axial direction of the shaft (10). The motor (40) has a rotor (41) and a stator (42). The rotor (41) is fixed to the shaft (10) in the motor space (33) so as to rotate integrally with the shaft (10). The stator (42) is fixed to the inner peripheral surface of the casing (30) in the motor space (33). The outer peripheral surface of the rotor (41) and the inner peripheral surface of the stator (42) face each other in the radial direction with a predetermined gap therebetween. The motor (40) is, for example, a permanent magnet synchronous motor. The motor (40) rotates the shaft (10).

The radial magnetic bearing (50) applies, as an electromagnet, electromagnetic force to the shaft (10) in the radial direction, thereby supporting the shaft (10) in the radial direction such that the radial magnetic bearing (50) supports the shaft (10) with respect to the casing (30) in a non-contact manner. There are two radial magnetic bearings (50). The two radial magnetic bearings (50) are arranged side by side in the axial direction of the shaft (10). The two radial magnetic bearings (50) are spaced apart from each other with the motor (40) interposed therebetween. The radial magnetic bearing (50) has a rotor (51) and a stator (52). The rotor (51) is fixed to the shaft (10) in the motor space (33) so as to rotate integrally with the shaft (10). The stator (52) is fixed to the inner peripheral surface of the casing (30) in the motor space (33). The outer peripheral surface of the rotor (51) and the inner peripheral surface of the stator (52) face each other in the radial direction with a predetermined gap therebetween.

The thrust magnetic bearing (60) applies, as an electromagnet, electromagnetic force to the shaft (10) in the axia1 direction, thereby supporting the shaft (10) in the axial direction such that the thrust magnetic bearing (60) supports the shaft (10) with respect to the casing (30) in a non-contact manner. There are two thrust magnetic bearings (60). The two thrust magnetic bearings (60) are arranged side by side in the axial direction of the shaft (10). The two thrust magnetic bearings (60) are spaced apart from each other with the motor (40) interposed therebetween. The thrust magnetic bearing (60) includes a rotor (61) and a stator (62). The rotor (61) is fixed to the shaft (10) in the motor space (33) so as to rotate integrally with the shaft (10). The stator (62) is fixed to the inner peripheral surface of the casing (30) in the motor space (33). The rotor (61) and the stator (62) face each other in the axial direction with a predetermined gap therebetween. The stator (62) is arranged outside the rotor (61) in the axial direction.

In the thrust magnetic bearing (60) on the one side, the stator (62) is located on the one side of the rotor (61). The thrust magnetic bearing (60) on the one side applies electromagnetic force to the one side of the shaft (10). In the thrust magnetic bearing (60) on the other side, the stator (62) is located on the other side of the rotor (61). The thrust magnetic bearing (60) on the other side applies electromagnetic force to the other side of the shaft (10).

(Seal Portion)

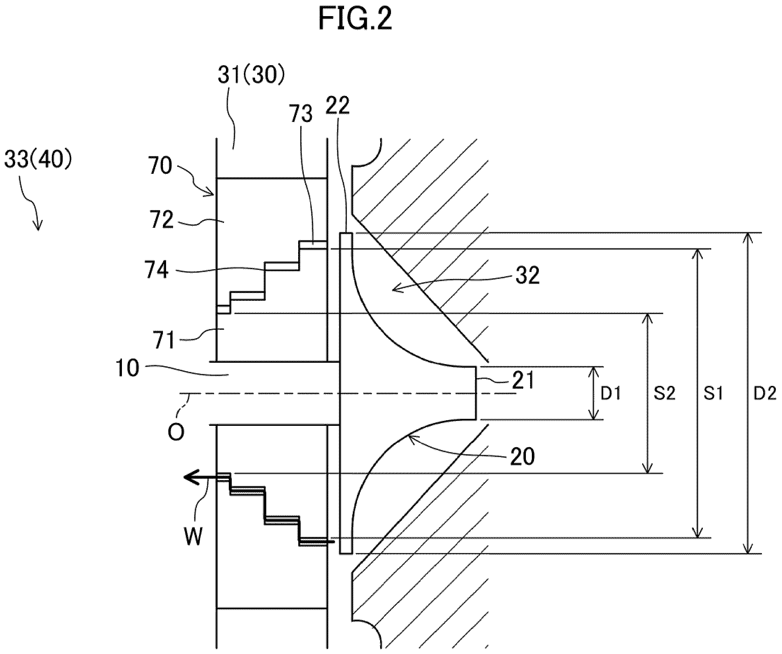

FIG. 2 is an enlarged view of a portion II in FIG. 1, which illustrates the seal portion (70) in closeup. As described above, the seal portion (70) is disposed on the inner peripheral side of the partition wall (31) in the casing (30). Here, the one side with respect to the partition wall (31) is referred to as an "impeller (20) side." The other side with respect to the partition wall (31) is referred to as a "motor (40) side." The seal portion (70) seals between the impeller space (32) on the impeller side with respect to the partition wall (31) and the motor space (33) on the motor (40) side (prime mover (40) side) with respect to the partition wall (31).

The seal portion (70) has a rotary seal portion (71) and a fixed seal portion (72). The rotary seal portion (71) is provided on the shaft (10) on the inner peripheral side of the partition wall (31). The rotary seal portion (71) rotates integrally with the shaft (10). The fixed seal portion (72) is provided on the casing (30). Specifically, the fixed seal portion (72) is fixed to the inner peripheral surface of the partition wall (31) in the casing (30).

The rotary seal portion (71) is formed in a substantially cylindrical shape. The rotary seal portion (71) extends in the axial direction of the shaft (10). The fixed seal portion (72) is formed in a substantially cylindrical shape. The fixed seal portion (72) extends in the axial direction of the shaft (10).

The rotary seal portion (71) and the fixed seal portion (72) are spaced apart from each other in the radial direction of the shaft (10) with a predetermined gap therebetween. The rotary seal portion (71) and the fixed seal portion (72) form a leakage flow path (73). The leakage flow path (73) is formed in a clearance between the rotary seal portion (71) and the fixed seal portion (72) in the radial direction. The fluid (W) discharged from the impeller discharge portion (22) of the impeller (20) leaks from the impeller space (32) on the impeller side to the motor space (33) on the motor (40) side (prime mover (40) side) through the leakage flow path (73).

The leakage flow path (73) is formed in a step shape. Specifically, the outer peripheral surface of the rotary seal portion (71) is provided with a step portion (74). The inner peripheral surface of the fixed seal portion (72) is provided with a step portion (74). The step portion (74) on the rotary seal portion (71) side and the step portion (74) on the fixed seal portion (72) side correspond to each other.

The diameter [mm] (diameter centered on the axis (O)) of the leakage flow path (73) is smaller on the motor (40) side than on the impeller (20) side due to the presence of the step portion (74). The diameter of the leakage flow path (73) is substantially equal to the outer diameter of the rotary seal portion (71) and the inner diameter of the fixed seal portion (72). The leakage flow path (73) has the maximum seal diameter (S 1) [mm] at an end portion (one end portion) on the impeller (20) side, and has the minimum seal diameter (S2) [mm] at an end portion (other end portion) on the motor (40) side.

The maximum seal diameter (S 1) of the leakage flow path (73) is the inlet diameter (D1) of the impeller suction portion (21) or more. Specifically, the maximum seal diameter (S 1) is greater than the inlet diameter (D 1). The maximum seal diameter (S 1) of the leakage flow path (73) is the outlet diameter (D2) of the impeller discharge portion (22) or less. Specifically, the maximum seal diameter (S 1) is smaller than the outlet diameter (D2).

The minimum seal diameter (S2) of the leakage flow path (73) is the inlet diameter (D1) of the impeller suction portion (21) or more. Specifically, the minimum seal diameter (S2) is greater than the inlet diameter (D 1). The minimum seal diameter (S2) of the leakage flow path (73) is the outlet diameter (D2) of the impeller discharge portion (22) or less. Specifically, the minimum seal diameter (S2) is smaller than the outlet diameter (D2).

(Thrust Force)

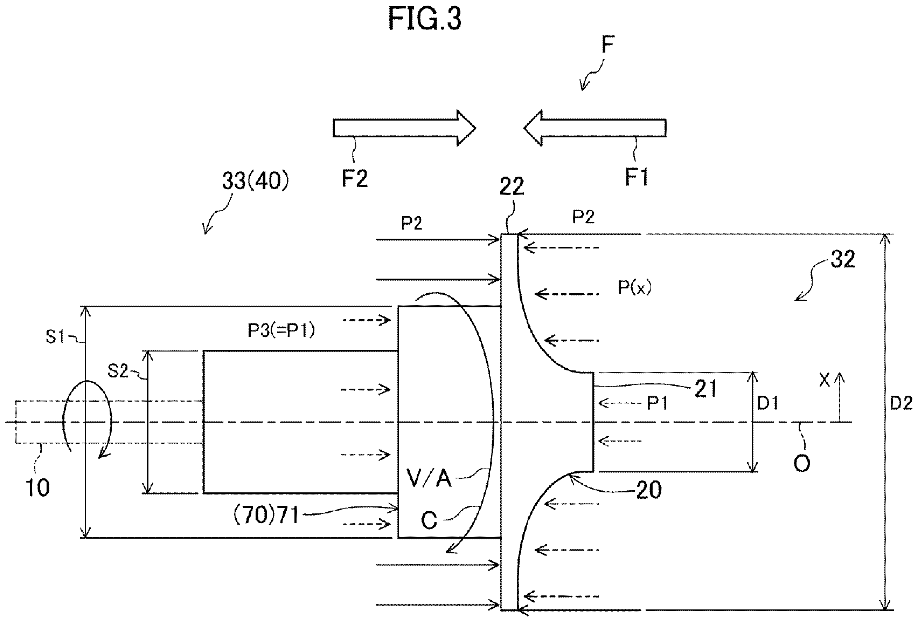

FIG. 3 schematically illustrates thrust force (F) acting on the impeller (20). The shape of the rotary seal portion (71) is simplified. A discharge pressure (P2) which is the pressure of the fluid (W) discharged from the impeller discharge portion (22) is higher than a suction pressure (P1) which is the pressure of the fluid (W) sucked into the impeller suction portion (21) (Discharge Pressure (P2) > Suction Pressure (P1)).

A motor space pressure (P3) which is a pressure in the motor space (33) on the motor (40) side (prime mover (40) side) is lower than the discharge pressure (P2) which is the pressure of the fluid (W) discharged from the impeller discharge portion (22) (Motor Space Pressure (P3) < Discharge Pressure (P2)). The motor space pressure (P3) is substantially equal to the suction pressure (P1) (Motor Space Pressure (P3) ≈ Suction Pressure (P1)). The motor space pressure (P3) is adjusted by controlling the pressure of the refrigerant for cooling the motor (40).

A pressure (P(x)) between the impeller suction portion (21) and the impeller discharge portion (22) is the function of a radial distance (x) from the axis (O). The pressure P(x) is the suction pressure (P1) or more and the discharge pressure (P2) or less (Suction Pressure (P1) ≤ Pressure P(x) ≤ Discharge Pressure (P2)).

A first thrust force (F1) acting on the motor (40) side (other side) is obtained by Expression 1 below.

[Expression 1]

$$F1 = P1 \times \frac{\pi}{4} D1^2 + \int_{\frac{D1}{2}}^{\frac{D2}{2}} 2\pi x P(x) dx$$

A second thrust force (F2) acting on the impeller (20) side (one side) is obtained by Expression 2 below.

[Expression 2]

$$F2 = P2 \times \frac{\pi}{4}(D2^2 - S1^2) + P3 \times \frac{\pi}{4}S1^2 \cong P2 \times \frac{\pi}{4}(D2^2 - S1^2) + P1 \times \frac{\pi}{4}S1^2$$

The total thrust force (F) when the motor (40) side (other side) is positive is obtained by Expression 3 below.

[Expression 3]

$$F = F1 - F2 = P1 \times \frac{\pi}{4}(D1^2 - S1^2) + \int_{\frac{D1}{2}}^{\frac{D2}{2}} 2\pi x P(x) dx - P2 \times \frac{\pi}{4}(D2^2 - S1^2)$$

Since Suction Pressure (P1) ≤ Pressure P(x) ≤ Discharge Pressure (P2), Expression 4 below is obtained.

[Expression 4]

$$P1 \times \frac{\pi}{4}(D2^2 - D1^2) \leq \int_{\frac{D1}{2}}^{\frac{D2}{2}} 2\pi x P(x) dx \leq P2 \times \frac{\pi}{4}(D2^2 - D1^2)$$

When Expression 5 is substituted into Expression 3, Expression 6 is obtained.

[Expression 5]

$$\int_{\frac{D1}{2}}^{\frac{D2}{2}} 2\pi x P(x)dx = P1 \times \frac{\pi}{4}(D2^2 - D1^2)$$

[Expression 6]

$$F = F1 - F2 = \frac{\pi}{4} \times (P1 - P2) \times (D2^2 - S1^2)$$

In Expression 6, when Maximum Seal Diameter (S1) = Outlet Diameter (D2), the total thrust force (F) is zero.

On the other hand, when Expression 7 is substituted into Expression 3, Expression 8 is obtained.

[Expression 7]

$$\int_{\frac{D1}{2}}^{\frac{D2}{2}} 2\pi x P(x)dx = P2 \times \frac{\pi}{4}(D2^2 - D1^2)$$

[Expression 8]

$$F = F1 - F2 = \frac{\pi}{4} \times (P1 - P2) \times (D1^2 - S1^2)$$

In Expression 8, when Maximum Seal Diameter (S1) = Inlet Diameter (D1), the total thrust force (F) is zero.

Thus, the thrust force (F) can be theoretically reduced to zero by setting the maximum seal diameter (S1) within the range of Inlet Diameter (D1) ≤ Maximum Seal Diameter (S1) ≤ Outlet Diameter (D2).

(Relationship between Mach Number of Rotary Seal Portion and Leakage Flow Rate in Leakage Flow Path)

The seal circumferential speed (V) [m/s] of the rotary seal portion (71) is obtained by Expression 9 below using the maximum seal diameter (S1) [mm] of the leakage flow path (73) and the number of rotations (C) [rpm] of the shaft (10). The number of rotations (C) of the shaft (10) is substantially equal to the number of rotations (C) of the motor (40). The number of rotations (C) [rpm] includes the maximum number of rotations, the rated number of rotations, and the number of rotations in normal operation, for example.

[Expression 9]

$$V = \frac{\pi \times S1 \times C}{60 \times 1000}$$

A Mach number (V/A) [-] is obtained by dividing the seal circumferential speed (V) of the rotary seal portion (71) by the sound speed (A) [m/s] of the fluid (W).

The sound speed (A) is obtained by Expression 10 below using an average molecular weight (M), a specific heat ratio (k), a gas constant (R), and the temperature (T) of the fluid (W).

[Expression 10]

$$A = \sqrt{\dfrac{kRT}{M}}$$

The gas constant (R) is basically invariant. When the type of fluid (W) is determined, the average molecular weight (M) and the specific heat ratio (k) are also determined.

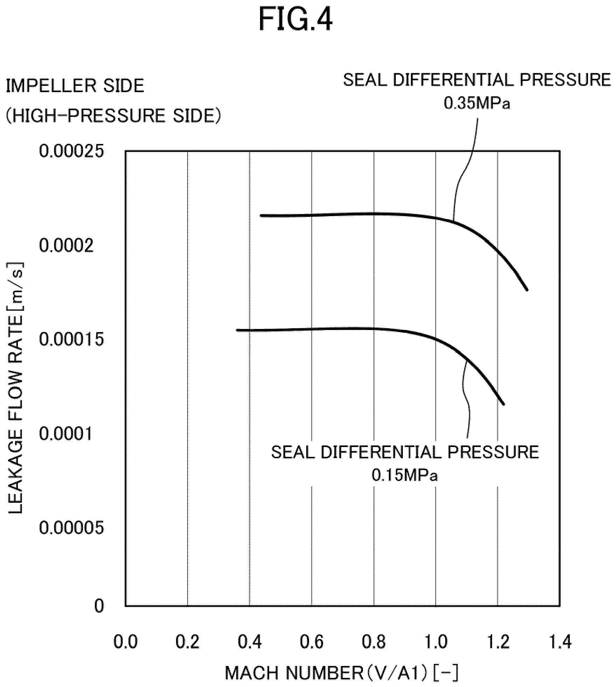

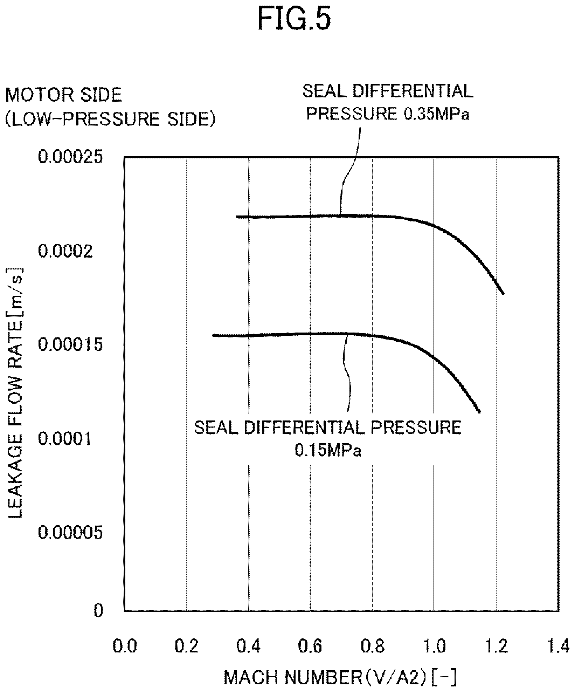

FIGS. 4 and 5 illustrate a relationship between the Mach number (V/A) [-] of the rotary seal portion (71) and the leakage flow rate [m/s] of the fluid (W) in the leakage flow path (73). Specifically, FIG. 4 illustrates the relationship between the Mach number (V/A1) [-] of the rotary seal portion (71) and the leakage flow rate [m/s] of the fluid (W) in the leakage flow path (73) at the sound speed [A1] of the fluid (W) on the impeller (20) side (high-pressure side). FIG. 5 illustrates the relationship between the Mach number (V/A2) [-] of the rotary seal portion (71) and the leakage flow rate [m/s] of the fluid (W) in the leakage flow path (73) at the sound speed [A2] of the fluid (W) on the motor (40) side.

When the Mach number (V/A) [-] reaches 0.8 or more, the leakage flow rate [m/s] starts decreasing. When the Mach number (V/A) [-] reaches 0.9 or more, the leakage flow rate [m/s] further decreases. When the Mach number (V/A) [-] reaches 1.0 or more, the leakage flow rate [m/s] significantly decreases.

Specifically, as illustrated in FIG. 4, at both seal differential pressures (differential pressure between the impeller space (32) and the motor space (33)) of 0.15 [MPa] and 0.35 [MPa] in a case where the sound speed [A1] of the fluid (W) on the impeller (20) side (high-pressure side) is used as a reference, the leakage flow rate [m/s] starts decreasing when the Mach number (V/A1) [-] reaches 0.8 or more, further decreases when the Mach number (V/A1) [-] reaches 0.9 or more, and significantly decreases when the Mach number (V/A1) [-] reaches 1.0 or more.

Similarly, as illustrated in FIG. 5, at both seal differential pressures (differential pressure between the impeller space (32) and the motor space (33)) of 0.15 [MPa] and 0.35 [MPa] in a case where the sound speed [A2] of the fluid (W) on the motor (40) side (low-pressure side) is used as a reference, the leakage flow rate [m/s] starts decreasing when the Mach number (V/A2) [-] reaches 0.8 or more, further decreases when the Mach number (V/A2) [-] reaches 0.9 or more, and significantly decreases when the Mach number (V/A2) [-] reaches 1.0 or more.

When the Mach number (V/A) [-] of the rotary seal portion (71) reaches 0.8 or more, the Mach number reaches a transonic range. Thus, it is considered that when the Mach number (V/A) [-] of the rotary seal portion (71) reaches 0.8 or more, the frictional resistance of the fluid (W) increases, thereby reducing the leakage flow rate [m/s] of the fluid (W) in the leakage flow path (73).

The graphs of FIGS. 4 and 5 are obtained under the following conditions: Inlet Diameter (D1) = 16 mm, Outlet Diameter (D2) = 38 mm, Maximum Seal Diameter (S1) = 28 mm, Minimum Seal Diameter (S2) = 24 mm, and Fluid (W) = R1234yf. The motor space pressure (P3) is substantially equal to the suction pressure (P1).

In a case where the seal differential pressure is 0.15 [MPa], the temperature in the vicinity of the impeller suction portion (21) in the impeller space (32) is about 25 [°C] to 50 [°C], the temperature in the vicinity of the impeller discharge portion (22) in the impeller space (32) is about 35 [°C] to 90 [°C], and the temperature in the motor space (33) is about 20 [°C] to 70 [°C]. In a case where the seal differential pressure is 0.15 [MPa], the number of rotations (C) is changed between 50000 [rpm] and 110000 [rpm].

In a case where the seal differential pressure is 0.35 [MPa], the temperature in the vicinity of the impeller suction portion (21) in the impeller space (32) is about 25 [°C] to 55 [°C], the temperature in the vicinity of the impeller discharge portion (22) in the impeller space (32) is about 50 [°C] to 110 [°C], and the temperature in the motor space (33) is about minus 10 [°C] to plus 70 [°C]. In a case where the seal differential pressure is 0.35 [MPa], the number of rotations (C) is changed between 80000 [rpm] and 125000 [rpm].

In a case where the seal differential pressure is 0.15 [MPa], the relationship between the Mach number (V/A1) and the leakage flow rate [m/s] in the impeller space (32) is as follows: Mach Number (V/A1) : Leakage Flow Rate [m/s] is 0.54:0.0001507, 0.92:0.0001476, 1.03:0.0001452, and 1.07:0.0001256.

In a case where the seal differential pressure is 0.15 [MPa], the relationship between the Mach number (V/A2) and the leakage flow rate [m/s] in the motor space (33) is as follows: Mach Number (V/A2) : Leakage Flow Rate [m/s] is 0.42:0.0001507, 0.81:0.0001476, 0.92:0.0001452, and 0.95:0.0001256.

In a case where the seal differential pressure is 0.35 [MPa], the relationship between the Mach number (V/A1) and the leakage flow rate [m/s] in the impeller space (32) is as follows: Mach Number (V/A1) : Leakage Flow Rate [m/s] is 0.92:0.0002202, 0.96:0.0002169, 1.04:0.0002165, 1.11:0.0002028, and 1.14:0.0001952.

In a case where the seal differential pressure is 0.35 [MPa], the relationship between the Mach number (V/A2) and the leakage flow rate [m/s] in the motor space (33) is as follows: Mach Number (V/A2) : Leakage Flow Rate [m/s] is 0.78:0.0002202, 0.82:0.0002169, 0.88:0.0002165, 0.98:0.0002028, and 0.99:0.0001952.

In this embodiment, the seal circumferential speed (V) of the rotary seal portion (71) is 0.8 times or more the sound speed (A) of the fluid (W) (i.e., the Mach number (V/A) is 0.8 or more). Specifically, the seal circumferential speed (V) of the rotary seal portion (71) is 0.8 times or more the sound speed (A1) of the fluid (W) on the impeller (20) side (high-pressure side) (i.e., the Mach number (V/A1) in the impeller space (32) is 0.8 or more). The seal circumferential speed (V) of the rotary seal portion (71) is 0.8 times or more the sound speed (A2) of the fluid (W) on the motor (40) side (prime mover (40) side: low-pressure side) (i.e., the Mach number (V/A2) in the motor space (33) is 0.8 or more).

(Advantages of First Embodiment)

The thrust force (F) acting on the impeller (20) can be made close to zero simply by adjusting the maximum seal diameter (S1) of the leakage flow path (73) within the range greater than the inlet diameter (D1) of the impeller suction portion (21). Thus, the turbomachine (1) capable of reducing the thrust force (F) with a simple configuration can be provided.

In particular, the thrust magnetic bearing (60) can be reduced in size by reduction in the thrust force (F). Further, a complicated mechanism for reducing the thrust force (F) is not required, and therefore, the configuration of the turbomachine (1) can be simplified and the axial length of the shaft (10) can be reduced. By reducing the axial length of the shaft (10), the eigenfrequency of the rotating body including the shaft (10) increases, and therefore, the shaft (10) can be rotated at a high speed.

By making the motor space pressure (P3) smaller than the discharge pressure (P2), the thrust force (F) acting on the impeller (20) can be made closer to zero more reliably (see Expression 2 and Expression 3).

If the seal circumferential speed (V) of the rotary seal portion (71) is 0.8 times or more the sound speed (A) of the fluid (W) (i.e., if the Mach number (V/A) is 0.8 or more), the seal circumferential speed (V) (Mach number (V/A)) reaches the transonic range, and the frictional resistance of the fluid (W) increases. This is advantageous in reducing the leakage of the fluid (W) from the impeller (20) side to the motor (40) side through the leakage flow path (73).

In particular, the seal circumferential speed (V) of the rotary seal portion (71) is 0.8 times or more the sound speed (A1) of the fluid (W) on the impeller (20) side and 0.8 times or more the sound speed (A2) of the fluid (W) on the motor (40) side, which is more advantageous in reducing the leakage of the fluid (W) through the leakage flow path (73).

Since the shaft (10) can be supported in a non-contact manner by the radial magnetic bearing (50) and the thrust magnetic bearing (60), the shaft (10) can be rotated at a high speed and a bearing loss can be reduced. The high-speed rotation of the shaft (10) is advantageous in increasing the seal circumferential speed (V) of the rotary seal portion (71).

The step-like leakage flow path (73) increases the pressure loss of the fluid (W) in the leakage flow path (73), and therefore, the leakage of the fluid (W) through the leakage flow path (73) can be reduced.

The turbomachine (1) is applied as the turbo compressor (1), and therefore, the fluid (W) can be compressed and pressurized.

The fluid (W) is applied as the refrigerant, and therefore, the turbo compressor (1) can be applied to the refrigeration apparatus.

<Second Embodiment>

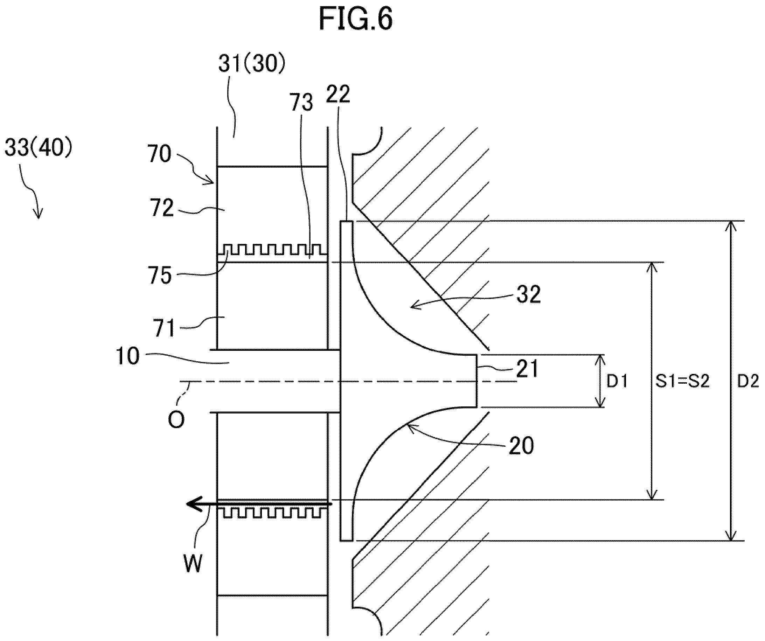

FIG. 6 is a view according to a second embodiment, which corresponds to FIG. 2, and illustrates the seal portion (70) in closeup. The leakage flow path (73) is not formed in the step shape. The diameter of the leakage flow path (73) is constant regardless of a position in the axial direction. In other words, the maximum seal diameter (S 1) of the leakage flow path (73) and the minimum seal diameter (S2) of the leakage flow path (73) are equal to each other.

The leakage flow path (73) is formed in a labyrinth shape. In other words, the leakage flow path (73) is formed in a corrugated shape. Specifically, the inner peripheral surface of the fixed seal portion (72) is provided with grooves (75) extending in the circumferential direction and arranged in the axial direction.

The corrugated leakage flow path (73) increases the pressure loss of the fluid (W) in the leakage flow path (73), and therefore, the leakage of the fluid (W) through the leakage flow path (73) can be reduced.

<Other Embodiments>

The impeller (20) may be an open impeller instead of the closed impeller. Even in a case where the impeller (20) is the open impeller, the thrust force (F) acting on the impeller (20) can be calculated by the expressions above.

The minimum seal diameter (S2) of the leakage flow path (73) may be smaller than the inlet diameter (D1) of the impeller suction portion (21).

The shaft (10) may be supported in a non-contact manner by an air bearing as the non-contact bearing (50, 60). As the air bearing, for example, a spiral groove bearing or a foil bearing may be applied. The shaft (10) may be supported by a sliding bearing or a rolling bearing.

The turbomachine (1) may be applied as a pump (e.g., centrifugal pump) instead of the turbo compressor (1). In this case, liquid may be applied as the fluid (W).

The step shape (step portion (74)) of the leakage flow path (73) in the first embodiment and the corrugated shape (grooves (75)) of the leakage flow path (73) in the second embodiment may be combined with each other.

The rotary seal portion (71) may be formed integrally with the shaft (10). The fixed seal portion (72) may be formed integrally with the casing (30).

The axis (O) of the shaft (10) may extend in the vertical direction. In this case, not only the thrust force (F) but also gravitation needs to be considered as a load acting on the impeller (20) in the axial direction.

The prime mover (40) is not limited to the motor (40), and for example, may be an engine.

While the embodiments and variations have been described above, it will be understood that various changes in form and details can be made without departing from the spirit and scope of the claims. The elements according to the embodiments, the variations thereof, and the other embodiments may be combined and replaced with each other.

DESCRIPTION OF REFERENCE CHARACTERS

W        Fluid

D1       Inlet Diameter

D2       Outlet Diameter

S1       Maximum Seal Diameter

S2       Minimum Seal Diameter

P1       Suction Pressure

P2       Discharge Pressure (Pressure)

P3       Motor Space Pressure (Pressure)

F        Thrust Force

V        Seal Circumferential Speed

A        Sound Speed

A1       Sound Speed

A2       Sound Speed

C        Number of Rotations

1        Turbo Compressor (Turbomachine)

10       Shaft (Rotary Shaft)

20       Impeller

21       Impeller Suction Portion

22       Impeller Discharge Portion

30       Casing

32       Impeller Space

33      Motor Space

40      Motor (Prime Mover)

50      Radial Magnetic Bearing (Non-Contact Bearing)

60      Thrust Magnetic Bearing (Non-Contact Bearing)

70      Sealing Portion

71      Rotary Seal Portion

72      Fixed Seal Portion

73      Leakage Flow Path

74      Step Portion

75      Groove

**Claims**

1.  A turbomachine (1) comprising:

    a rotary shaft (10);
    an impeller (20) provided on the rotary shaft (10);
    a casing (30) housing the rotary shaft (10);
    a prime mover (40) spaced apart from the impeller (20) in an axial direction of the rotary shaft (10) and rotating the rotary shaft (10); and
    a seal portion (70) sealing between an impeller (20) side and a prime mover (40) side,
    the impeller (20) having
    an impeller suction portion (21) into which fluid (W) is sucked, and
    an impeller discharge portion (22) from which the fluid (W) is discharged,
    the seal portion (70) having
    a rotary seal portion (71) provided on the rotary shaft (10), and
    a fixed seal portion (72) provided on the casing (30),
    the rotary seal portion (71) and the fixed seal portion (72) being spaced apart from each other in a radial direction of the rotary shaft (10) and extending in the axial direction,
    the rotary seal portion (71) and the fixed seal portion (72) forming a leakage flow path (73) through which the fluid (W) discharged from the impeller discharge portion (22) leaks from the impeller (20) side to the prime mover (40) side,
    a maximum seal diameter (S 1) of the leakage flow path (73) being greater than an inlet diameter (D1) of the impeller suction portion (21).

2.  The turbomachine (1) of claim 1, wherein
    a pressure (P3) on the prime mover (40) side is lower than a pressure (P2) of the fluid (W) discharged from the impeller discharge portion (22).

3.  The turbomachine (1) of claim 1 or 2, wherein
    a seal circumferential speed (V) of the rotary seal portion (71) is 0.8 times or more a sound speed (A) of the fluid (W).

4.  The turbomachine (1) of claim 3, wherein
    the seal circumferential speed (V) is 0.8 times or more the sound speed (A1) of the fluid (W) on the impeller (20) side.

5.  The turbomachine (1) of claim 3 or 4, wherein
    the seal circumferential speed (V) is 0.8 times or more the sound speed (A2) of the fluid (W) on the prime mover (40) side.

6. The turbomachine (1) of any one of claims 1 to 5, wherein
the rotary shaft (10) is supported by a non-contact bearing (50, 60).

7. The turbomachine (1) of any one of claims 1 to 6, wherein
the leakage flow path (73) is formed in a step shape or a corrugated shape.

8. The turbomachine (1) of any one of claims 1 to 7, wherein
the turbomachine (1) is a turbo compressor (1).

9. The turbomachine (1) of claim 8, wherein
the fluid (W) is natural refrigerant including one of HFC refrigerant, HFO refrigerant, or HC refrigerant, or a refrigerant mixture including at least two of the HFC refrigerant, the HFO refrigerant, and the HC refrigerant.

FIG.1

# FIG.2

FIG.3

# FIG.4

# FIG.5

MOTOR SIDE
(LOW-PRESSURE SIDE)

# FIG.6

EP 4 484 757 A1

## INTERNATIONAL SEARCH REPORT

| International application No. |
| --- |
| **PCT/JP2023/006563** |

**A.     CLASSIFICATION OF SUBJECT MATTER**

*F04D 29/051*(2006.01)i; *F04D 29/058*(2006.01)i; *F04D 29/10*(2006.01)i; *F04D 29/28*(2006.01)i; *F16C 32/04*(2006.01)i; *F16J 15/447*(2006.01)i
FI:    F04D29/051; F04D29/058; F04D29/10 A; F04D29/28 Z; F16C32/04 Z; F16J15/447

According to International Patent Classification (IPC) or to both national classification and IPC

**B.     FIELDS SEARCHED**

Minimum documentation searched (classification system followed by classification symbols)

F04D29/051; F04D29/058; F04D29/10; F04D29/28; F16C32/04; F16J15/447

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| Y | US 2007/0063449 A1 (INGERSOLL-RAND COMPANY) 22 March 2007 (2007-03-22) paragraphs [0010]-[0058], fig. 1-9 | 1-9 |
| Y | JP 2012-072736 A (KOBE STEEL LTD) 12 April 2012 (2012-04-12) paragraphs [0016]-[0029], fig. 1-7 | 1-9 |
| A | JP 2021-161894 A (DAIKIN IND LTD) 11 October 2021 (2021-10-11) entire text, all drawings | 1-9 |
| A | WO 2016/038661 A1 (MITSUBISHI HEAVY INDUSTRIES COMPRESSOR CORPORATION) 17 March 2016 (2016-03-17) entire text, all drawings | 1-9 |
| A | JP 05-099196 A (HITACHI LTD) 20 April 1993 (1993-04-20) entire text, all drawings | 1-9 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 March 2023** | **04 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/006563**

| Patent document cited in search report | | | Publication date (day/month/year) | Patent family member(s) | | | Publication date (day/month/year) |
|---|---|---|---|---|---|---|---|
| US | 2007/0063449 | A1 | 22 March 2007 | WO | 2007/035701 | A2 | |
| | | | | CN | 101297118 | A | |
| JP | 2012-072736 | A | 12 April 2012 | CN | 102434486 | A | |
| JP | 2021-161894 | A | 11 October 2021 | WO | 2021/199750 | A1 | |
| | | | | CN | 115380167 | A | |
| WO | 2016/038661 | A1 | 17 March 2016 | US | 2017/0227012 | A1 | |
| | | | | entire text, all drawings | | | |
| | | | | EP | 3168479 | A1 | |
| | | | | CN | 106574622 | A | |
| JP | 05-099196 | A | 20 April 1993 | US | 5312226 | A | |
| | | | | entire text, all drawings | | | |
| | | | | EP | 550801 | A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11218091 A